# EUROPÄISCHE PATENTSCHRIFT

(11) **EP 1 036 969 B1**
(45) Veröffentlichungstag und Bekanntmachung des Hinweises auf die Patenterteilung: **21.11.2001**
(21) Anmeldenummer: 00250079.1
(22) Anmeldetag: 02.03.2000
(51) Int. Cl.: F16L 13/14, B21D 39/04, F16L 33/207

(54) **Rohrpresskupplung**
Press-fitted pipe joint
Raccord de serrage pour tuyaux

(30) Priorität: 18.03.1999 DE 19913976
(43) Veröffentlichungstag der Anmeldung: 20.09.2000
(73) Patentinhaber: SMB Innovative Produkte Wildau GmbH, 15745 Wildau (DE)
(72) Erfinder: Soost, Siegfried, Dipl.-Ing., 15745 Wildau (DE)
(74) Vertreter: Radwer, Dieter

(56) Entgegenhaltungen:
- EP-A- 0 848 200
- DE-U- 29 721 224
- DE-U- 29 822 752

## Beschreibung

Die Erfindung betrifft eine nicht lösbare Rohrverbindung, bei der in die Endabschnitte der miteinander zu verbindenden Rohre eine als Rohrverbinder dienende Stützhülse eingesteckt und anschließend die Endabschnitte gegen diese Stützhülse radial verpreßt werden. Zur Gewährleistung einer einwandfreien und dauerhaften Verbindung sind ferner Mittel vorgesehen, die die Einstecktiefe und den Bereich der Verpressung geometrisch definieren und festlegen.

Nichtlösbare, durch axiales oder radiales Verpressen der Rohrendabschnitte herstellbare Rohrverbindungen unter Verwendung einer Stütz- und einer Preßhülse sind beispielsweise aus DE 91 10 998 U1, DE 44 41 373 C1, DE 43 25 349 A1, WO 85/00646, DE 197 17 862 C1, AT 402 095 B bereits bekannt. Die zur Herstellung der Preßverbindung vorgesehenen Stütz- oder Preßhülsen sind regelmäßig mit Mitteln, beispielsweise in Form eines mittig auf der Stützhülse angeordneten Ringbundes - DE 91 10 998 U1, DE 43 25 349 A1, WO 85/00646 - oder einer Anschlagschultern bildenden Führungsnut in der Preßhülse - AT 402 095 B, DE 197 17 862 C1 -, ausgestattet, die als Führung für das Preßwerkzeug dienen und gleichzeitig die Einstecktiefe des Endabschnittes der zu verbindenden Rohre und den Bereich der gegenseitigen Verpressung der Endabschnitte und der Preßhülse mit der Stützhülse definieren.

Aus DE 297 21 224 U1 ist ferner eine Leitungsverbindung ohne Verwendung einer Preßhülse bekannt, die vorrangig für den Anschluß bzw. die Verbindung von relativ dickwandigen Rohren mit größeren Rohrdurchmessern dient. Die Einstecktiefe der zu verpressenden Rohrendabschnitte wird durch einen Anschlag- und Führungsring bestimmt, der gleichzeitig auch als Führung für das Preßwerkzeug dient. Der Anschlag- und Führungsring besteht aus zwei Ringhälften, die in ihrer Trennungsebene formschlüssig miteinander verbindbar sind und besitzt eine mehrfach abgewinkelte, Z-förmige Konfiguration, wobei ein Fußabschnitt in eine äußere Ringnut der Preßhülse eingreift und auf diese Weise den durch Formschluß zusammengefügten Ring in einer lagebestimmten Position auf der Preßhülse fixiert. Der Führungs- und Anschlagring nach DE 297 21 224 U1, mit dem eine weitere Reduzierung der Fertigungs- und Montagekosten erreicht werden kann, hat aber den Nachteil, daß durch die formschlüssige Verbindung beider Ringhälften in der Trennebene keine größeren, oftmals durch das Preßwerkzeug und den Preßvorgang ausgelösten radial- und/oder axialgerichteten Kräfte aufgenommmen und auf die Stützhülse übertragen werden. Im praktischen Einsatz hat sich gezeigt, daß sich beide Ringhälften leicht lösen und dadurch zusätzlicher Mehraufwand für die Herstellung der gewünschten Rohrverbindung entsteht.

Eine weitere Verbesserung dieses Anschlag- und Führungsringes stellt die Lösung nach DE 298 22 752 U1 dar. Zur Herstellung einer nichtlösbaren Rohrverbindung verwendet die Lösung nach DE 298 22 752 U1 einen einfachen Rohrfitting als Stützhülse und einen einteiligen Anschlagring, der wiederum auch als Führung für das Preßwerkzeug dient. Der Anschlag- und Führungsring wird nach dem Aufstecken auf die Stützhülse in seiner, die Einstecktiefe begrenzenden Position lagegesichert fixiert und besitzt an der als Anschlagfläche dienenden Seitenfläche radial versetzt angeordnete Haltezungen, die die Preßhülse mit Abstand zur Anschlagfläche aufnehmen und halten. Auf diese Weise entstehen Sichtfenster, die von der Anschlagfläche, den radial voneinander beabstandeten Haltezungen und der Stirnfläche der Preßhülse begrenzt sind. Durch diese Sichtfenster können die exakte Anlage des zwischen Stützhülse und Preßhülse eingesteckten und zu verpressenden Rohrensabschnittes an der Anschlagfläche und die Verpressung des Rohrendabschnittes und der Preßhülse gegen die Stützhülse kontrolliert werden.

Die nicht lösbare Rohrverbindung nach DE 298 22 752 U1 dient vorranging zur gegenseitigen Verbindung und zum Anschluß relativ dünnwandiger Rohre und Verbundrohre. Die Vormontage der Rohrverbindung und das Verpressen der Rohrendabschnitte wird gelegentlich durch das Aufstecken und lagegesicherte Fixieren des Anschlag- und Führungsringes auf der Stützhülse unter Verwendung des hierfür vorgesehenen elastischen Ringes nachteilig beeinflußt.

Der Erfindung liegt daher die Aufgabe zugrunde, ein weiter verbessertes Führungs- und Anschlagelement anzugeben, das zur Herstellung von nicht lösbaren Rohrverbindungen mit und ohne Preßhülse gleichermaßen vorteilhaft einsetzbar ist und durch eine geänderte Verbindung zwischen Stützhülse und Führungs- und Anschlagelement die auftretenden Axial- und Radialkräfte sicher überträgt.

Erfindungsgemäß wird die Aufgabe durch die im Anspruch 1 angegebenen Merkmale gelöst. Vorteilhafte Weiterbildungen der Erfindung ergeben sich aus den Unteransprüchen 2 bis 10.

Das erfindungsgemäße Anschlag- und Führungselement besteht aus einem Grundring und einem Fügering, die aus einem geeigneten Kunststoff im Spritzgießverfahren kostengünstig hergestellt werden können.

Der Grundring ist einseitig getrennt und verfügt über einen Biegebereich, der beide Ringhälften scharnierartig miteinander verbindet, und einen inneren Ringbund. Bei der Montage der Rohrverbindung kann der Grundring durch den Biegebereich so weit geöffnet werden, daß er über den Außendurchmesser der Stützhülse steckbar ist und nach seiner bestimmungsgemäßen Positionierung mit seinem inneren Ringbund in eine Nut der Stützhülse eingreift.

Der Grundring verfügt an seiner Anschlagsseite ferner über eine koaxial zur Ringmittelachse verlaufende Nut, die zur Aufnahme des Fügeringes dient. Durch Einstecken des Fügeringes in diese Nut wird der auf die Stützhülse aufgesteckte und in die Nut der Stützhülse eingreifende Grundring geschlossen und in dieser Position mittels des Fügeringes so fixiert, daß durch die Formschlußverbindung zwischen der in der Stützhülse befindlichen Nut und dem inneren Ringbund eine Verbindung zwischen der Stützhülse und dem als Anschlag dienenden Grundringes zur Bestimmung der Einstecktiefe der Rohrendabschnitte und des Verpreßbereiches entsteht, die in der Lage ist, alle im Verpreßbereich auftretenden Radial- und Axialkräfte sicher auf die Stützhülse oder auf das anzuschließende Rohr zu übertragen.

Der Fügering verfügt über mindestens eine ringförmige Wulst, die nach Einsetzen des Fügeringes in den Grundring in eine Hinterschneidung der Nut zur Aufnahme des Fügeringes eingreift und den eingesetzten Ring gegen ungewolltes Herauslösen sichert. Um das Einsetzen des Fügeringes in den Grundring zu erleichtern, kann die ringförmige Wulst in einzelne Segmente unterteilt sein.

Das Einsetzen des Fügeringes in den Grundring wird ferner durch Ausnehmungen, die den Grundring in axialer Richtung durchdringen, und durch eine Einführschräge erleichtert, die in der äußeren Nutwand an der Anschlagseite des Grundringes vorgesehen ist. In einer alternativen Ausführung hierzu können die Konturen der inneren und äußeren Nutwandung gegeneinander ausgetauscht sein, d. h. die Einführschräge und die Hinterschneidung zur Aufnahme der Wulst des Fügeringes sind in der inneren Nutwand vorgesehen, während die äußere Nutwand keine Kontur besitzt und eine glatte Oberfläche aufweist. Der Querschnitt des Fügeringes ist in diesem Fall an die jeweilige Konfiguration der Nutwandungen anzupassen.

Die Ringbreite des Fügeringes kann so bemessen sein, daß der Fügering mit der Anschlagfläche des Grundringes abschließt. Der Fügering kann sich aber auch über die Anschlagfläche des Grundringes hinaus erstrecken. Dadurch entsteht ein zusätzlicher radialer Anschlag für den zu verpressenden Rohr-Endabschnitt, der die Vormontage und das Verpressen der an der Rohrverbindung beteiligten Bauelelemente in vorteilhafter Weise unterstützt. Bei korrekter Verpressung ist die an der Anschlagfläche anliegende Stirnseite des eingesteckten Rohr-Endabschnittes durch den überstehenden Ringteil verdeckt. Die hergestellte Verpressung ist fehlerhaft, wenn die Stirnseite des eingesteckten Rohr-Endabschnittes am überstehenden Ringteil sichtbar ist.

Nach einer weiteren Ausführungsform der Erfindung ist der Fügering an der der Anschlagfläche des Grundringes zugeordneten Stirnfläche mit voneinander radial beabstandeten Haltezungen versehen, die zur Aufnahme und zur Halterung einer Preßhülse dienen. Die Preßhülse wird in bekannter Weise mit Abstand zur Anschlagfläche des Grundringes fixiert. Dabei entstehen Sichtfenster, über die die genaue Anlage des zu verpressenden Rohr-Endabschnittes an die Anschlagfläche festgestellt und die exakte Durchführung der Verpressung kontrolliert werden kann.

Die erfindungsgemäße Lösung gestattet eine kostengünstige Fertigung, eine schnelle und problemlose Vormontage der Rohrverbindung und gewährleistet das sichere Übertragen der auftretenden Axial- und Radialkräfte während und nach Durchführung der Verpressung der Rohr-Endabschnitte mit der Stützhülse.

Die Erfindung soll nachstehend an einem Ausführungsbeispiel näher erläutert werden. In der dazugehörigen Zeichnung zeigen:
- Fig. 1 -: eine Ringhälfte des aus Grund- und Fügering bestehenden Führungs- und Anschlagelementes mit eingesetztem Fügering,
- Fig. 2 -: das Aufstecken des Grundringes auf die Stützhülse bei der Vormontage der Rohrverbindung,
- Fig. 3 -: den geschlossenen Grundring, der in dieser Position durch Einsetzen des Fügeringes fixiert wird,
- Fig. 4 -: den Teilschnitt durch die vormontierte Rohrverbindung mit dem angesetzten Preßwerkzeug,
- Fig. 5 -: den Teilschnitt durch eine Rohrverbindung, wobei der Fügering mit der Anschlagfläche des Grundringes abschließt,
- Fig. 6 -: eine Rohrverbindung nach der Erfindung unter Verwendung einer Preßhülse, die durch den Fügering gehalten und fixiert wird im Teilschnitt.

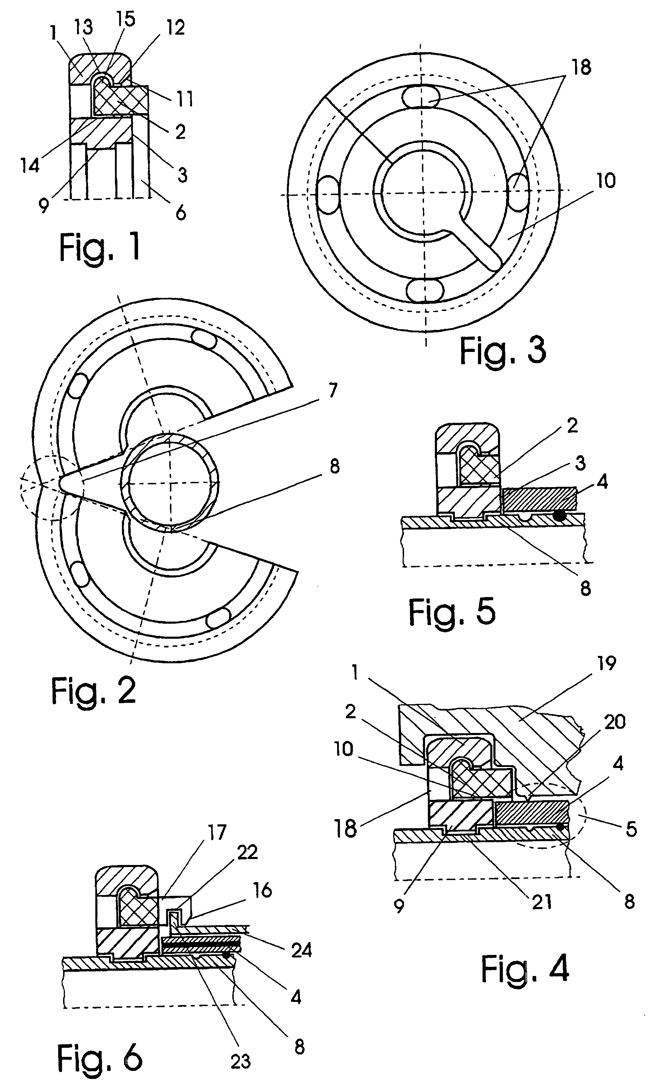

Das erfindungsgemäße Führungs- und Anschlagelement, das die Einstecktiefe der zu verbindenden Rohr-Endabschnitte 4 und den Verpreßbereich 5 geometrisch festlegt und durch die Führung des Preßwerkzeuges 19 die Preßkonturen 20 auf die Formkonturen der Stützhülse 8 orientiert - Fig. 4, besteht, wie aus Fig. 1 ersichtlich ist, aus einem Grundring 1 und einem Fügering 2.

Der Grundring 1 besitzt einen inneren Ringbund 9, der in die Nut 21 der Stützhülse 8 eingreift und nach Einsetzen des Fügeringes 2 in die koaxial zur Ringmittelachse verlaufenden Nut 10 des Grundringes 1 eine formschlüssige Verbindung zwischen dem Grundring 1 und der Stützhülse 8 herstellt.

Der Grundring 1 ist ein einseitig geteilter Körper mit einem Biegebereich 7, der beide Ringhälften scharnierartig miteinander verbindet. Durch die Scharnierfunktion des Biegebereiches 7 können beide Ringhälften so weit geöffnet werden, daß der Grundring 1 ohne Schwierigkeiten über den Außendurchmesser der Stützhülse 8 geschoben werden kann. Mit dem Zusammenführen beider Ringhälften erhält der Grundring 1 seine kreisrunde Körperform, wobei der innere Ringbund 9 bestimmungsgemäß in die Nut 21 der Stützhülse 8 eingreift. Mit dem Einsetzen des Fügeringes 2 wird der Grundring 1 praktisch geschlossen und in seiner vorgesehenen Position auf der Stützhülse 8 fixiert.

Der Fügering 2 ist ein geschlossener Körper, der über mindestens eine ringförmige Wulst 15 verfügt. Die ringförmige Wulst 15 rastet nach Einsetzen des Fügeringes 2 in den Grundring 1 in eine Hinterschneidung 13 ein, die in der äußeren oder der inneren Wand der Nut 10 des Grundringes 1 vorgesehen ist, und verhindert auf diese Weise ein ungewolltes Herauslösen des Fügeringes 1 aus dem Grundring 1.

Um das Einsetzen des Fügeringes 2 zu erleichtern, ist bei dem vorliegenden Ausführungsbeispiel in der äußeren Nutwand der Nut 10 ferner eine Einführschräge 11 vorgesehen, die durch den zylindrischen Abschnitt 12 von der Hinterschneidung 13 getrennt ist.

Die Ringbreite des Fügeringes 2 kann so gewählt werden, daß der Fügering 2 mit der Anschlagfläche 3 des Grundringes 1 abschließt - Fig. 5 - oder über die Anschlagfläche 3 des Grundringes 1 - Fig. 1 und Fig. 4 - hinausragt und auf diese Weise einen zusätzlichen radialen Anschlag für den zu verpressenden Rohr-Endabschnitt 4 - Fig. 4 - bildet.

Der Grundring 1 kann mit um 90° versetzt angeordneten Ausnehmungen 18 versehen sein, die den Grundring 1 durchdringen und in die Nut 10 ausmünden. Die Ausnehmungen 18 dienen in diesem Falle als Montage- und Demontagehilfen für den in den Grundring einzusetzenden Fügering 2.

Nach einer weiteren Ausführungsform der Erfindung - Fig. 6 - sind auf der der Anschlagfläche 3 des Grundringes 1 zugewandten Stirnseite des Fügeringes 2 mehrere radial voneinander beabstandete Haltezungen 17 vorgesehen. Diese Haltezungen 17 besitzen eine Aufnahmenut 22, in die ein Bund 23 einer Preßhülse 24 eingreift, um die Preßhülse 24 mit Abstand zur Anschlagfläche 3 zu halten und in der eingesetzten Stellung zu fixieren.

Während die in Fig. 1, 4 und 5 dargestellten Ausführungsbeispiele vorrangig zur Herstellung von unlösbaren Rohrverbindungen dienen, bei denen der Rohr-Endabschnitt 4 direkt mit der Stützhülse 8 verpreßt wird, dient die Ausführung nach Fig. 6 vornehmlich für solche Rohrverbindungen, bei denen aufgrund der relativ niedrigen Rohrwandung und/oder der Materialstruktur des anzuschließenden Rohr-Endabschnittes 4 eine Preßhülse 24 vorzusehen ist, wobei in diesem Fall die Preßhülse 24 zusammen mit dem Rohr-Endabschnitt 4 gegen die Stützhülse 8 verpreßt wird.

### Bezugszeichenaufstellung

- 1: Grundring
- 2: Fügering
- 3: Anschlagfläche
- 4: Rohr-Endabschnitt
- 5: Verpreßbereich
- 6: Ringteil
- 7: Biegebereich
- 8: Stützhülse
- 9: Ringbund
- 10: Nut
- 11: Einführschräge
- 12: Abschnitt
- 13: Hinterschneidung
- 14: Nutwand
- 15: Wulst
- 16: Einführschräge
- 17: Haltezunge
- 18: Ausnehmung
- 19: Preßwerkzeug
- 20: Formkontur
- 21: Nut
- 22: Aufnahmenut
- 23: Bund
- 24: Preßhülse

## Patentansprüche

1. Rohrverbindung durch nichtlösbares, direktes Verpressen der miteinander zu verbindenden Rohr-Endabschnitte gegen eine, als einfaches Rohrfitting ausgebildete Stützhülse, auf die ein die Einstecktiefe der Rohr-Endabschnitte begrenzendes Element, das gleichzeitig als Führung für das Preßwerkzeug dient, lagegesichert angeordnet ist, **dadurch gekennzeichnet, daß** das Führungs- und Anschlagelement aus einem Grundring (1) und einem Fügering (2) besteht.

2. Rohrverbindung nach Anspruch 1, **dadurch gekennzeichnet, daß** der Grundring (1) ein einseitig geteilter, aufweitbarer und über die Stützhülse (8) steckbarer Ring, mit einem inneren Ringbund (9) und einer koaxial zur Ringlängsachse verlaufenden Nut (10) ist.

3. Rohrverbindung nach Anspruch 1 und 2, **dadurch gekennzeichnet, daß** die Nutwand (14) zylindrisch ausgebildet ist und die gegenüberliegende äußere Nutwand eine Einführschräge (11) aufweist, an die sich ein zylindrischer Abschnitt (12) mit einer nachfolgenden Hinterschneidung (13) anschließt.

4. Rohrverbindung nach einem der Ansprüche 1 bis 3, **dadurch gekennzeichnet, daß** in die Nut (10) radial versetzt angeordnete Ausnehmungen (18) einmünden, die den Grundring (1) axial durchdringen.

5. Rohrverbindung nach einem der Ansprüche 1 bis 4, **dadurch gekennzeichnet, daß** der Fügering (2) ein geschlossener, mit einer Wulst (15) versehener Ring ist, der mit der Anschlagfläche (3) des Grundringes (1) abschließt und mit dem Einstecken in die Nut (10) den Grundring (1) schließt und ihn in der Nut (21) der Stützhülse (8) lagesichernd fixiert.

6. Rohrverbindung nach einem der Ansprüche 1 bis 5, **dadurch gekennzeichnet, daß** sich der Fügering (2) über die Anschlagfläche (3) des Grundringes (1) hinaus erstreckt und der überstehende Ringteil (6) einen geschlossenen Kreisring bildet.

7. Rohrverbindung nach einem der Ansprüche 1 bis 6, **dadurch gekennzeichnet, daß** der Fügering (2) radial voneinander beabstandete Haltezungen (17) mit einer Einführschräge (16) und einer Aufnahmenut (22) besitzt, über die eine Preßhülse (24) aufgenommen und mit Abstand zur Anschlagfläche (3) des Grundringes (1) gehalten und fixiert wird.

8. Rohrverbindung nach einem der Ansprüche 1 bis 7, **dadurch gekennzeichnet, daß** der Fügering (2) aus zwei Ringhälften besteht.

9. Rohrverbindung nach einem der Ansprüche 1 bis 8, **dadurch gekennzeichnet, daß** die Wulst (15) des Fügeringes (2) in Kreissegmente, die in die Hinterschneidung (13) des Grundringes (1) eingreifen, unterteilt ist.

10. Rohrverbindung nach einem der Ansprüche 1 bis 9, **dadurch gekennzeichnet, daß** die Konturen in den inneren und äußeren Wandungen der Nut (10) des Grundringes (1) gegeneinander ausgetauscht sind und der Querschnitt des Fügeringes (2) an die jeweilige Kontur der Nut (10) angepaßt ist.

## Claims

1. Press-fitted pipe joint for connecting pipe-end-sections to a simple pipe-fitting supporting sleeve in which a limiting element for the depth of insertion of the pipe-end-sections, which simultaneously serves as the guide for the pressing tool, is attached in a secure position, **characterized by** the guide and cheek element consists of a neck ring (1) and joint ring (2).

2. Pipe connection in accordance with claim 1, **characterized by,** the neck ring (1) being a single-sided, split, expandable ring that can be placed over the supporting sleeve (8) with an inner ring (9) and a tongue (10) coaxial to the longitudinal axis.

3. Pipe connection in accordance with claims 1 and 2, **characterized by,** the wall of the tongue (14) being cylindrical in shape and the opposing exterior wall having a groove (11) to which a cylindrical section (12) connects with a subsequent undercut (13).

4. Pipe connection in accordance with claims 1 to 3, **characterized by,** the tongue (10) having radially placed recesses (18) which penetrate the neck ring (1) axially.

5. Pipe connection in accordance with claims 1 to 4, **characterized by,** the joint ring (2) being a closed ring with a bead (15) which connects to the stopping face (3) of the neck ring (1) and closes the neck ring (1) with the insertion of the tongue (10) and sets it in the groove (21) of the support sleeve (8).

6. Pipe connection in accordance with claims 1 to 5, **characterized by** the joint ring (2) extending beyond the stopping face (3) of the neck ring (1) and the portion of the ring extending beyond that (6) forming a closed ring.

7. Pipe connection in accordance with claims 1 to 6, **characterized by** the joint ring possessing radially spaced tongues (17) with a bevel (16) and a groove (22) through which the press sleeve (24) can be taken up and held and set with space to the stopping face (3) of the neck ring (1).

8. Pipe connection in accordance with claims 1 to 7, **characterized by the** joint ring consisting of two ring halves.

9. Pipe connection in accordance with claims 1 to 8, **characterized by the** bead (15) of the joint ring (2) is divided into circular segments which move into the undercut (13) of the neck ring.

10. Pipe connection in accordance with claims 1 to 9, **characterized by the** contours in the interior and exterior walls of the groove (10) of the neck ring (1) are exchanged with one another and the cross-section of the joint ring (2) adapted to the specific contour of the groove (10).

## Revendications

1. Assemblage de tuyaux par compression directe fixe des sections terminales de tuyau devant être assemblées ensemble contre un manchon de support configuré en simple raccord sur lequel est disposé, dans une position fixe, un élément limitant la profondeur d'enfoncement des sections terminales de tuyau et servant en même temps de guidage pour l'outil de compression, **caractérisé par le fait que** l'élément de butée et de guidage se compose d'un anneau de base (1) et d'un anneau d'assemblage (2).

2. Assemblage de tuyaux selon la revendication 1, **caractérisé par le fait que** l'anneau de base (1) est un'anneau divisé d'un côté qui peut être élargi et enfoncé sur le manchon de support (8) et qui est muni d'une collerette annulaire intérieure (9) et d'une rainure (10) s'étendant coaxialement par rapport à l'axe longitudinal de l'anneau.

3. Assemblage de tuyaux selon les revendications 1 et 2, **caractérisé par le fait que** la paroi de la rainure (14) a une configuration cylindrique et que la paroi de la rainure extérieure opposée présente une surface biaise d'insertion (11) au niveau de laquelle une section cylindrique (12) forme un ensemble avec une contre-dépouille suivante (13).

4. Assemblage de tuyaux selon l'une des revendications 1 à 3, **caractérisé par le fait que** des creux (18) décalés radialement les uns par rapport aux autres et traversant axialement l'anneau de base (1) débouchent dans la rainure (10).

5. Assemblage de tuyaux selon l'une des revendications 1 à 4, **caractérisé par le fait que** l'anneau d'assemblage (2) est un anneau fermé pourvu d'un renflement (15) qui forme un ensemble avec la surface de butée (3) de l'anneau de base (1) et ferme l'anneau de base (1) en s'insérant dans la rainure (10) et le fixe dans la rainure (21) du manchon de support (8) en le maintenant dans sa position.

6. Assemblage de tuyaux selon l'une des revendications 1 à 5, **caractérisé par le fait que** l'anneau d'assemblage (2) s'étire au-delà de la surface de butée (3) de l'anneau de base (1) et que la partie de l'anneau en saillie (6) forme un anneau de cercle fermé.

7. Assemblage de tuyaux selon l'une des revendications 1 à 6, **caractérisé par le fait que** l'anneau d'assemblage (2) possède des languettes de maintien (17) espacées radialement les unes des autres et présentant une surface biaise d'insertion (16) et une rainure de fixation (22) dans laquelle un manchon de compression (24) est logé et par laquelle il est maintenu et fixé en formant un espace par rapport à la surface de butée (3) de l'anneau de base (1).

8. Assemblage de tuyaux selon l'une des revendications 1 à 7, **caractérisé par le fait que** l'anneau d'assemblage (2) se compose de deux moitiés d'anneau.

9. Assemblage de tuyaux selon l'une des revendications 1 à 8, **caractérisé par le fait que** le renflement (15) de l'anneau d'assemblage (2) est subdivisé en segments de cercle mordant dans la contra-dépouille (13) de l'anneau de base (1).

10. Assemblage de tuyaux selon l'une des revendications 1 à 9, **caractérisé par le fait que** les contours situés dans les parois extérieure et intérieure de la rainure (10) de l'anneau de base (1) sont interchangés et que la section transversale de l'anneau d'assemblage (2) est adaptée au contour respectif de la rainure (10).
